# EUROPÄISCHE PATENTSCHRIFT

(11) **EP 2 294 301 B1**
(45) Veröffentlichungstag und Bekanntmachung des Hinweises auf die Patenterteilung: **15.02.2012**
(21) Anmeldenummer: 08874464.4
(22) Anmeldetag: 10.12.2008
(51) Int. Cl.: F02D 41/00, F02D 19/06

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCÉDÉ ET DISPOSITIF POUR COMMANDER UN MOTEUR À COMBUSTION INTERNE

(30) Priorität: 26.05.2008 DE 102008001984
(43) Veröffentlichungstag der Anmeldung: 16.03.2011
(73) Patentinhaber: Robert Bosch GmbH, 70442 Stuttgart (DE)
(72) Erfinder: DE TRICAUD, Stephane, 70191 Stuttgart (DE); MUELLER, Thomas, 70376 Stuttgart (DE)
(86) Internationale Anmeldenummer: PCT/EP2008/067174
(87) Internationale Veröffentlichungsnummer: WO 2009/143912

(56) Entgegenhaltungen:
- EP-A- 1 757 791
- EP-A- 1 854 982
- US-A- 5 197 451
- US-A- 5 582 157

## Beschreibung

### Stand der Technik

Die Erfindung geht aus von einem beispielsweise aus der nachveröffentlichten DE 10 2007 019 641 A1 bekannten Verfahren und einer Vorrichtung zur Steuerung einer Brennkraftmaschine. Die Steuerung von Brennkraftmaschinen erfolgt allgemein dadurch, dass Betriebskenngrößen, wie beispielsweise ein Drehmomentwunsch vorgegeben werden und daraus unter Berücksichtigung anderer Eingangsgrößen des Steuergeräts Steuergrößen für wenigstens ein Stellglied der Brennkraftmaschine, wie beispielsweise die Injektoren, vorgegeben werden.

Da zunehmend häufiger beim Betrieb von Dieselkraftmaschinen, aber auch nach dem Otto-Verfahren-Prinzip arbeitenden Brennkraftmaschinen, Kraftstoffe unterschiedlicher Qualität verwendet werden, ist es erforderlich, die aktuell vorhandene Kraftstoffart während des Betriebs der Brennkraftmaschine zu erfassen und, falls erforderlich, die Steuerung der Brennkraftmaschine anzupassen.

Bei dem aus dem Stand der Technik bekannten Verfahren, das für Dieselbrennkraftmaschinen einsetzbar ist, wird die Kraftstoffqualität anhand der Laufruhe der Brennkraftmaschine im Leerlauf erkannt und entsprechend die Ansteuerung des mindestens einen Stellglieds der Brennkraftmaschine angepasst. EP1757791 erkennt anhand des Lambdawertes die Kraftstoffqualität.

### Offenbarung der Erfindung

Der Erfindung liegt die Aufgabe zugrunde, ein Verfahren bereitzustellen, das auf einfache Weise die Erkennung von geänderten Kraftstoffqualitäten, wie beispielsweise Normkraftstoff und Biodiesel erkennt und dadurch die Umschaltung auf andere Kennfelder beziehungsweise andere Sätze von Kennfeldern ermöglicht. Dadurch werden die Leistung, die Emissionen und das Betriebsverhalten der Brennkraftmaschine weitestgehend unabhängig von der Qualität des eingesetzten Kraftstoffs.

Diese Aufgabe wird erfindungsgemäß bei einem Verfahren zur Steuerung einer Brennkraftmaschine, wobei verschiedene Aktuatoren der Brennkraftmaschine von einem Steuergerät in Abhängigkeit des Betriebspunkts der Brennkraftmaschine angesteuert werden, wobei das Steuergerät die Aktuatoren mit Hilfe eines ersten Kennfelds oder eines ersten Satzes von Kennfeldern ansteuert, wenn die Brennkraftmaschine mit einem Basiskraftstoff betrieben wird, und wobei das Steuergerät die Aktuatoren mit Hilfe eines zweiten Kennfelds oder eines zweiten Satzes von Kennfeldern ansteuert, wenn die Brennkraftmaschine mit einem alternativen Kraftstoff betrieben wird, dadurch gelöst, dass der Kraftstoffverbrauch der Brennkraftmaschine je Zeiteinheit in einem Referenzbetriebspunkt und unter Verwendung des Basiskraftstoffs als erster Referenzwert abgespeichert wird, dass der tatsächliche Kraftstoffverbrauch der Brennkraftmaschine in dem Referenzbetriebspunkt ermittelt und aus der Differenz zwischen dem ersten Referenzwert und dem tatsächlichen Kraftstoffverbrauch auf die Kraftstoffqualität geschlossen wird.

Das erfindungsgemäße Verfahren macht sich die Unterschiede hinsichtlich Dichte und spezifischem Heizwert verschiedener Kraftstoffarten zu Nutze. Wenn nämlich die Brennkraftmaschine in einem Referenzbetriebspunkt betrieben wird, ergibt sich daraus ein bestimmter Kraftstoffverbrauch der Brennkraftmaschine, der zum Beispiel in Gramm/Stunde [g/h] angegeben werden kann.

Wenn nun die Brennkraftmaschine in einem Referenzbetriebspunkt und mit einer Kraftstoffqualität mit bekannten Eigenschaften, die nachfolgend als Basiskraftstoff bezeichnet wird, betrieben wird, lässt sich der Kraftstoffverbrauch in diesem Referenzbetriebspunkt und unter Verwendung des Basiskraftstoffs als erster Referenzwert R₁ bezeichnen.

Das erfindungsgemäße Verfahren macht sich nun die Tatsache zu Nutze, dass sich durch die Verwendung eines alternativen Kraftstoffes, wie beispielsweise Biodiesel, dessen Dichte und Heizwert anders sind als die entsprechenden Parameter des Basiskraftstoffs, ein anderer tatsächlicher Kraftstoffverbrauch [g/h] einstellt, wenn die Brennkraftmaschine im Referenzbetriebspunkt betrieben wird. Aus dieser Differenz des ersten Referenzwerts R₁ und des tatsächlichen Kraftstoffverbrauchs kann auf die aktuell eingesetzte Kraftstoffart geschlossen werden.

Der tatsächliche Kraftstoffverbrauch kann aus dem Einspritzdruck und der Ansteuerdauer vom Motorsteuergerät ohne Weiteres mit Hilfe der entsprechenden Kennfelder berechnet werden.

Das erfindungsgemäße Verfahren zeichnet sich durch den geringen Rechenzeitbedarf aus. Des weiteren erfordert das erfindungsgemäße Verfahren keine zusätzlichen Sensoren oder Aktuatoren und kann letztendlich bei allen in Serie gefertigten Steuergeräten ohne Weiteres bei einem Software Update nachgerüstet werden.

Das erfindungsgemäße Verfahren ist auch robust hinsichtlich seiner Anwendung, da es nur dann zu Änderungen in der Ansteuerung der Brennkraftmaschine führt, wenn ein signifikanter Unterschied zwischen dem Referenzwert und dem tatsächlichen Verbrauch der Brennkraftmaschine im Referenzbetriebspunkt detektiert werden konnte.

In besonders vorteilhafter Ausgestaltung des erfindungsgemäßen Verfahrens wird ein Wechseln des Kraftstoffs vom Basiskraftstoff zum alternativen Kraftstoff erkannt, wenn die Differenz zwischen erstem Referenzwert R₁ und tatsächlichen Kraftstoffverbrauch positiv und größer als ein erster Schwellenwert SW₁ ist. Infolgedessen wird auf das zweite Kennfeld oder den zweiten Satz von Kennfeldern umgeschaltet.

In weiterer vorteilhafter Ausgestaltung des erfindungsgemäßen Verfahrens ist vorgesehen, dass ein Wechsel des Kraftstoffs vom alternativen zum Basiskraftstoff erkannt wird, wenn die Differenz zwischen erstem Referenzwert R₁ und tatsächlichem Kraftstoffverbrauch negativ und kleiner als ein zweiter Schwellenwert SW₂ ist, und dass infolgedessen auf das erste Kennfeld oder den zweiten Satz von Kennfeldern umgeschaltet wird.

Wenn die Differenz zwischen erstem Referenzwert R₁ und tatsächlichem Kraftstoffverbrauch kleiner oder gleich dem ersten Schwellwert SW₁ und größer oder gleich dem zweiten Schwellenwert ist, wird der aktuelle Satz von Kennfeldern beibehalten. Dieser Fall tritt dann ein, wenn die Kraftstoffqualität unverändert geblieben ist.

Es hat sich weiter als vorteilhaft erwiesen, wenn der Referenzbetriebspunkt dem Leerlauf der Brennkraftmaschine entspricht und gleichzeitig der Druck in einem Rail der Brennkraftmaschine oder der Einspritzdruck einem vorgegebenen Druck entspricht.

Dieser Referenzbetriebspunkt und der Einspritzdruck beziehungsweise der Raildruck sind erfindungsgemäß so auszuwählen, dass in diesem Referenzbetriebspunkt die Unterschiede zwischen den in Frage kommenden Kraftstoffarten besonders groß sind. Dann nämlich ist die erfindungsgemäße Kraftstofferkennung besonders wirksam und es können infolgedessen die unterschiedlichen Eigenschaften der Kraftstoffe bestmöglich kompensiert werden.

Des Weiteren wird das erfindungsgemäße Verfahren verbessert, wenn der Referenzbetriebspunkt nur angefahren wird, wenn gewisse Randbedingungen erfüllt sind. Beispielsweise muss die Temperatur der Brennkraftmaschine oberhalb eines dritten Schwellenwerts SW₃ liegen, die Temperatur des Kraftstoffs soll ebenfalls oberhalb eines vierten Schwellenwerts SW₄ liegen und der Umgebungsluftdruck soll oberhalb eines fünften Schwellenwerts SW₅ liegen.

Des Weiteren hat es sich als vorteilhaft erwiesen, wenn das erfindungsgemäße Verfahren nur ausgeführt wird, wenn die Brennkraftmaschine über eine Mindestzeitdauer in dem Referenzbetriebspunkt betrieben wurde. Dann nämlich ist sichergestellt, dass ein stabiler und stationärer Betriebszustand erreicht wurde und insbesondere Adaptions- und Regelvorgänge innerhalb des Steuergeräts abgeschlossen wurden, so dass der tatsächliche Kraftstoffverbrauch im Referenzbetriebspunkt an Aussagekraft gewinnt.

Es hat sich weiter als vorteilhaft erwiesen, wenn das erfindungsgemäße Verfahren ereignisgesteuert ausgeführt wird. Beispielsweise kann nach Ablauf einer vorgegebenen Betriebsdauer der Brennkraftmaschine oder, mindestens einmal nach jedem Tankvorgang das erfindungsgemäße Verfahren durchgeführt werden.

Um zu verhindern, dass das erfindungsgemäße Verfahren zu häufig ausgeführt wird, kann die Zahl der Durchführungen des Verfahrens je Fahrzyklus auf einen Maximalwert beschränkt werden.

Die eingangs genannte Aufgabe wird ebenfalls durch eine Vorrichtung zur Steuerung einer Brennkraftmaschine gelöst, die nach einem der vorhergehenden Verfahren arbeitet.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: ein stark vereinfachtes Blockschaltbild einer Steuerung einer Brennkraftmaschine und
- Figur 2: ein Ablaufdiagramm eines Ausführungsbeispiels eines erfindungsgemäßen Verfahrens.

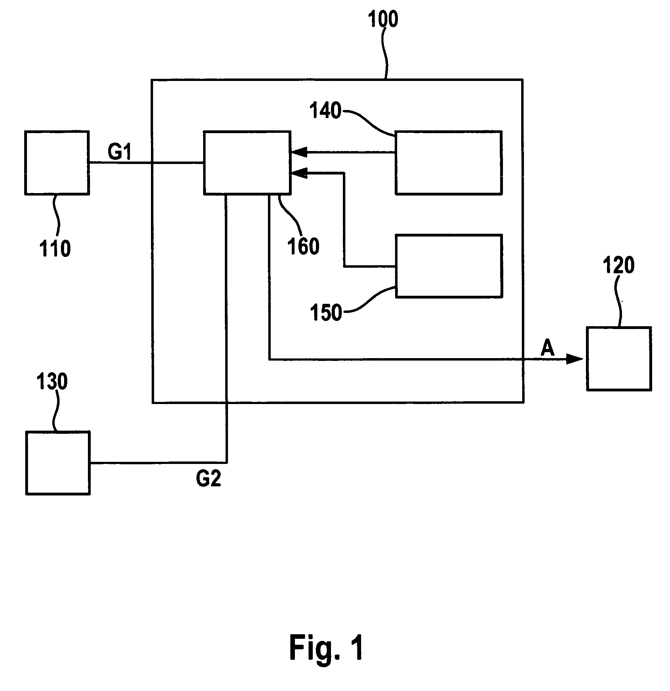

Anhand der Figur 1 wird nachfolgend stark vereinfacht ein Verfahren zur Steuerung einer Brennkraftmaschine dargestellt und erläutert.

Ein Steuergerät 100 erhält von einer ersten Funktionseinheit 110 eine erste Größe G1. Wenn die erste Funktionseinheit ein Sensor, beispielsweise zur Ermittlung der Stellung des Fahrpedals ist, dann ist die erste Größe G1 das Ausgangssignal dieses Sensors und entspricht somit dem Drehmomentwunsch des Fahrers.

Das Steuergerät in Abhängigkeit von der ersten Größe G1 steuert das Steuergerät 100 einen Aktuator oder ein Stellglied 120 mit einer Ausgangsgröße A an. Dieses Stellglied können beispielsweise die Injektoren einer Brennkraftmaschine sein und die Ausgangsgröße A kann unter anderem Einspritzdruck, Einspritzdauer und Einspritzzeitpunkt mit dem die Injektoren angesteuert werden, umfassen.

Eine weitere Eingangsgröße des Steuergeräts 100 ist die zweite Größe G1, die von einem weiteren Sensor 130 und/oder einer weiteren Funktionseinheit bereitgestellt wird. Ein Mikrokontroller 160 des Steuergeräts 100 ermittelt unter Berücksichtigung der ersten Eingangsgröße G1 und der zweiten Eingangsgröße G2 sowie weiterer nicht dargestellter Eingangsgrößen das Ausgangssignal A. Dabei greift der Mikrokontroller 160 alternativ auf ein erstes Kennfeld 140 beziehungsweise einen ersten Satz von Kennfeldern oder ein zweites Kennfeld 150 beziehungsweise einen zweiten Satz von Kennfeldern zurück.

Wenn die Brennkraftmaschine mit einer Basis von normalem Kraftstoff, der nachfolgend auch als Basiskraftstoff bezeichnet wird, betrieben werden soll, dann greift der Mikrokontroller 160 auf das erste Kennfeld 140 zu. Wenn die Brennkraftmaschine mit einem alternativen Kraftstoff betrieben wird, dann greift der Mikrokontroller 160 auf das zweite Kennfeld 150 zu.

Dadurch ist es möglich, unabhängig von der Art des aktuell verwendeten Kraftstoffs, die das Betriebsverhalten der Brennkraftmaschine hinsichtlich Höchstleistung, Emissionen, insbesondere von CO₂, und Laufruhe auf einem konstant optimalen Niveau zu halten.

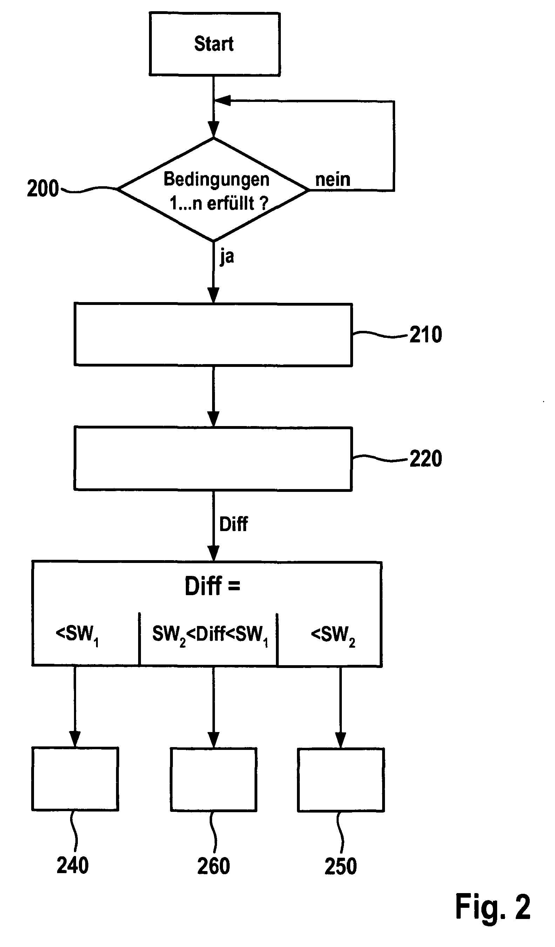

In Figur 2 wird anhand eines Ablaufdiagramms ein Ausführungsbeispiel des erfindungsgemäßen Verfahrens näher erläutert.

Das erfindungsgemäße Verfahren beginnt nach dem Start mit einer Abfrage, ob die Bedingungen 1 bis n zur Ansteuerung des Referenzbetriebspunkts erfüllt sind.

Solche Bedingungen können beispielsweise sein, dass die Temperatur der Brennkraftmaschine und des Kraftstoffs oberhalb eines dritten Schwellwerts SW₃ und oberhalb eines vierten Schwellwerts SW₄ liegen.

Entsprechendes gilt für einen Umgebungsluftdruck P_{amb}, der oberhalb eines fünften Schwellwerts SW₅ liegen muss.

Es hat sich als besonders vorteilhaft erwiesen, wenn der Referenzbetriebspunkt im Leerlauf der Brennkraftmaschine liegt. Dadurch ist es möglich, beispielsweise bei einem Ampelstopp, das erfindungsgemäße Verfahren durchzuführen. Besonders vorteilhaft ist es, wenn zu dem Referenzbetriebspunkt auch weitere Applikationsparameter, insbesondere ein vorgegebener Einspritzdruck beziehungsweise ein Raildruck Pᵣₐᵢₗ, gehören. In diesem Fall kann der Referenzbetriebspunkt aktiv angesteuert werden, sobald sich die Brennkraftmaschine im Leerlauf befindet.

Die erste Abfrage ist in Figur 2 mit dem Bezugszeichen 200 versehen. Wenn das Ergebnis der Abfrage 200 negativ ist, beginnt das Verfahren von Neuem. Andernfalls wird in einem optionalen ersten Funktionsblock 210 der erste Referenzbetriebspunkt angesteuert. Dies kann beispielsweise dadurch entstehen, dass im Leerlauf der Brennkraftmaschine der Einspritzdruck beziehungsweise der Raildruck Pᵣₐᵢₗ auf einen vorgegebenen Wert, von beispielsweise 600 bar, angehoben beziehungsweise gesteuert wird.

Wenn nach dem Ansteuern des Referenzbetriebspunkts die Brennkraftmaschine für eine vorgegebene Mindestdauer tₘᵢₙ in diesem Referenzbetriebspunkt betrieben wurde, hat sich ein stabiler Betriebszustand der Brennkraftmaschine eingestellt und die Ansteuerdauern der Injektoren haben infolgedessen gleichbleibende und aussagekräftige Werte angenommen.

Über die Ansteuerdauern beziehungsweise Einspritzdauern der Injektoren kann nun in einem zweiten Funktionsblock 220 der tatsächliche Kraftstoffverbrauch V_{tatsächlich} der Brennkraftmaschine ermittelt werden. Gleichzeitig wird die Differenz Diff R₁- V_{tatsächlich} zwischen dem ersten Referenzwert R₁ und dem tatsächlichen Kraftstoffverbrauch V_{tatsächlich} ermittelt.

Diese Differenz Diff ist die Ausgangsgröße des zweiten Funktionsblocks 220. In einem dritten Block 230, wird abhängig von den Werten der Differenz Diff entschieden, ob auf das erste Kennfeld 140 oder das zweite Kennfeld 150 gewechselt wird, oder ob das derzeit verwendete Kennfeld 140 oder 150 beibehalten wird.

Der in dem Funktionsblock 230 ganz links dargestellte Fall liegt dann vor, wenn die Differenz Diff größer als ein erster Schwellwert SW₁, wobei der erste Schwellwert SW₁ positiv ist. Die Differenz Diff ist dann größer Null, wenn der tatsächliche Kraftstoffverbrauch kleiner als der erste Referenzwert ist. In diesem Fall wechselt das Steuergerät vom ersten Kennfeld 140 auf das zweite Kennfeld 150 beziehungsweise den zweiten Satz von Kennfeldern. (Siehe Bezugszeichen 240)

Der in dem Funktionsblock 230 ganz rechts dargestellte Fall liegt dann vor, wenn die Differenz Diff negativ und kleiner als ein zweiter Schwellwert SW₂, wobei der zweite Schwellwert SW₂ negativ ist. Dieser Fall tritt dann ein, wenn von Kraftstoff einer zweiten Qualität auf Kraftstoff der ersten Qualität gewechselt wurde. In diesem Fall wechselt das Steuergerät vom zweiten Kennfeld 150 auf das erste Kennfeld 140 beziehungsweise den ersten Satz von Kennfeldern. (Siehe Bezugszeichen 250)

Wenn die Differenz Diff kleiner als der erste Schwellenwert SW₁ und größer als der zweite Schwellwert SW2 ist, macht diese kleine Differenz Diff einen Wechsel des Kennfelds nicht erforderlich. (Siehe Bezugszeichen 260)

Zusätzlich oder alternativ ist es auch möglich, dass eine neuer Wert für die Systemmenge als Referenzwert im Steuergerät beziehungsweise in einem EEPROM abgespeichert wird. Dieser neue Wert wird, wie im Übrigen auch andere nach dem erfindungsgemäßen Verfahren ermittelte Werte, bevorzugt mit Hilfe statistischer Methoden bestimmt, damit die Qualität dieser Werte möglichst hoch ist. Eventuell vorhanden "alte" Referenzwerte werden dabei in aller Regel überschrieben.

Das erfindungsgemäße Verfahren wurde am Beispiel von zwei Kraftstoffqualitäten beschrieben. Es kann jedoch ohne weiteres auch zur Erkennung mehrerer Kraftstoffqualitäten eingesetzt werden.

Das erfindungsgemäße Verfahren wurde beispielhaft für den normalen Magerbetrieb einer Dieselbrennkraftmaschine beschrieben. Das Verfahren lässt sich jedoch auch auf andere Betriebsmodi, wie zum Beispiel Regenerationsbetrieb für einen Rußpartikelfilter oder den NSC-Betrieb für einen NOₓ- Speicherkatalysator erweitern.

## Patentansprüche

1. Verfahren zur Steuerung einer Brennkraftmaschine, wobei verschiedene Aktuatoren der Brennkraftmaschine von einem Steuergerät (100) in Abhängigkeit des Betriebspunkts der Brennkraftmaschine angesteuert werden, wobei das Steuergerät (100) die Aktuatoren mit Hilfe eines ersten Kennfelds (140) oder eines ersten Satzes von Kennfeldern ansteuert, wenn die Brennkraftmaschine mit einem Basiskraftstoff mit bekannten Eigenschaften betrieben wird, und wobei das Steuergerät (100) die Aktuatoren mit Hilfe eines zweiten Kennfelds (150) oder eines zweiten Satzes von Kennfeldern ansteuert, wenn die Brennkraftmaschine mit einem alternativen Kraftstoff betrieben wird, **dadurch gekennzeichnet, dass** der Kraftstoffverbrauch der Brennkraftmaschine je Zeiteinheit [g/h] in einem Referenzbetriebspunkt (B_{ref}) und unter Verwendung des Basiskraftstoffs als erster Referenzwert (R₁) abgespeichert wird, dass der tatsächliche Kraftstoffverbrauch (V_{tatsächlich}) der Brennkraftmaschine in dem Referenzbetriebspunkt (B_{ref}) ermittelt wird, dass der erste Referenzwert (R₁) und der tatsächliche Kraftstoffverbrauch (V_{tatsächlich}) verglichen werden, und dass aus der Differenz (Diff = R₁ - V_{tatsächlich}) zwischen erstem Referenzwert (R₁) und tatsächlichem Kraftstoffverbrauch (V_{tatsächlich}) auf die Kraftstoffqualität geschlossen wird, dass ein Wechsel des Kraftstoffs vom Basiskraftstoff zum alternativen Kraftstoff erkannt wird, wenn die Differenz (Diff = R₁ - V_{tatsächlich}) zwischen erstem Referenzwert (R₁) und tatsächlichem Kraftstoffverbrauch (V_{tatsächlich}) positiv und größer als ein erster Schwellenwert (SW₁) ist, und dass in Folge dessen auf das zweite Kennfeld (150) oder den zweiten Satz von Kennfeldern umgeschaltet wird.

2. Verfahren nach Anspruch 1, **dadurch gekennzeichnet, dass** ein Wechsel des Kraftstoffs vom alternativen Kraftstoff zum Basiskraftstoff erkannt wird, wenn die Differenz (Diff = R₁ - V_{tatsächlich}) zwischen erstem Referenzwert (R₁) und tatsächlichem Kraftstoffverbrauch (V_{tatsächlich}) negativ und kleiner als ein zweiter Schwellenwert (SW₂) ist, und dass in Folge dessen auf das erste Kennfeld (140) oder den ersten Satz von Kennfeldern umgeschaltet wird.

3. Verfahren nach Anspruch 1, **dadurch gekennzeichnet, dass** das aktuelle Kennfeld oder der aktuelle Satz von Kennfeldern beibehalten wird, wenn die Differenz (Diff = R₁ - V_{tatsächlich}) zwischen erstem Referenzwert (R₁) und tatsächlichem Kraftstoffverbrauch (V_{tatsächlich}) kleiner oder gleich dem ersten Schwellenwert (SW₁) ist und größer oder gleich dem zweiten Schwellenwert (SW₂) ist.

4. Verfahren nach einem der vorhergehenden Ansprüche, **dadurch gekennzeichnet, dass** der Referenzbetriebspunkt (B_{ref}) dem Leerlauf der Brennkraftmaschine entspricht und gleichzeitig der Druck (Pᵣₐᵢₗ) in einem Rail der Brennkraftmaschine oder der Einspritzdruck (pᵢₙⱼ) einen vorgegebenen Wert (p_{Rail,1}) entspricht.

5. Verfahren nach einem der vorhergehenden Ansprüche, **dadurch gekennzeichnet, dass** der Referenzbetriebspunkt (B_{ref}) nur angefahren wird, wenn die Temperatur der Brennkraftmaschine (T_{BKM}) oberhalb eines dritten Schwellwerts (SW₃) liegt (T_{BKM} > SW₃), und die Temperatur des Kraftstoffs (T_{fuel}) oberhalb eines vierten Schwellwerts (SW₄) liegt (T_{fuel} > SW₄).

6. Verfahren nach einem der vorhergehenden Ansprüche, **dadurch gekennzeichnet, dass** der Referenzbetriebspunkt (B_{ref}) nur angefahren wird, wenn der UmgebungsLuftdruck (p_{amb}) oberhalb eines fünften Schwellwerts (SW₅) liegt (p_{amb} > SW₅).

7. Verfahren nach einem der vorhergehenden Ansprüche, **dadurch gekennzeichnet, dass** das Verfahren nur ausgeführt wird, wenn die Brennkraftmaschine während einer Mindestzeitdauer (Tₘᵢₙ) in dem Referenzbetriebspunkt (B_{ref}) betrieben wurde.

8. Verfahren nach einem der vorhergehenden Ansprüche, **dadurch gekennzeichnet, dass** das Verfahren ereignisgesteuert ausgeführt wird.

9. Verfahren nach Anspruch 8, **dadurch gekennzeichnet, dass** das Verfahren nach Ablauf einer vorgegebenen Betriebszeit der Brennkraftmaschine und/oder mindestens einmal nach jedem Tankvorgang ausgeführt wird.

10. Verfahren nach einem der Ansprüche 8 oder 9, **dadurch gekennzeichnet, dass** die Zahl der Durchführungen des Verfahrens je Fahrzyklus auf einen Maximalwert beschränkt ist.

11. Vorrichtung zur Steuerung einer Brennkraftmaschine, **dadurch gekennzeichnet, dass** die Vorrichtung nach einem der vorhergehenden Verfahren arbeitet.

## Claims

1. Method for controlling an internal combustion engine, wherein different actuators of the internal combustion engine are activated by a control unit (100) as a function of the operating point of the internal combustion engine, wherein the control unit (100) activates the actuators with the aid of a first characteristic map (140) or a first set of characteristic maps when the internal combustion engine is operated with a base fuel with known properties, and wherein the control unit (100) activates the actuators with the aid of a second characteristic map (150) or a second set of characteristic maps when the internal combustion engine is operated with an alternative fuel, **characterized in that** the fuel consumption of the internal combustion engine per unit time [g/h] at a reference operating point (B_{ref}) and using the base fuel is stored as a first reference value (R₁), **in that** the actual fuel consumption (V_{actual}) of the internal combustion engine at the reference operating point (B_{ref}) is determined, **in that** the first reference value (R₁) and the actual fuel consumption (V_{actual}) are compared, and **in that** the fuel quality is inferred from the difference (Diff = R₁ - V_{actual}) between the first reference value (R₁) and the actual fuel consumption (V_{actual}), **in that** a change of the fuel from the base fuel to the alternative fuel is detected if the difference (Diff = R₁ - V_{actual}) between the first reference value (R₁) and the actual fuel consumption (V_{actual}) is positive and greater than a first threshold value (SW₁) , and **in that**, as a result thereof, a switch is made to the second characteristic map (150) or the second set of characteristic maps.

2. Method according to Claim 1, **characterized in that** a change of the fuel from the alternative fuel to the base fuel is detected if the difference (Diff = R₁ - V_{actual}) between the first reference value (R₁) and the actual fuel consumption (V_{actual}) is negative and less than a second threshold value (SW₂), and **in that**, as a result thereof, a switch is made to the first characteristic map (140) or the first set of characteristic maps.

3. Method according to Claim 1, **characterized in that** the present characteristic map or the present set of characteristic maps is maintained if the difference (Diff = R₁ - V_{actual}) between the first reference value (R₁) and the actual fuel consumption (V_{actual}) is less than or equal to the first threshold value (SW₁) and greater than or equal to the second threshold value (SW₂).

4. Method according to one of the preceding claims, **characterized in that** the reference operating point (B_{ref}) corresponds to idle operation of the internal combustion engine and at the same time the pressure (P_{Rail}) in a rail of the internal combustion engine or the injection pressure (pᵢₙⱼ) corresponds to a predefined value (p_{Rail},₁).

5. Method according to one of the preceding claims, **characterized in that** the reference operating point (B_{ref}) is adopted only when the temperature of the internal combustion engine (T_{ICE}) lies above a third threshold value (SW₃) (T_{ICE} > SW₃) and the temperature of the fuel (T_{fuel}) lies above a fourth threshold value (SW₄) (T_{fuel} > SW₄) .

6. Method according to one of the preceding claims, **characterized in that** the reference operating point (B_{ref}) is adopted only when the ambient air pressure (p_{amb}) lies above a fifth threshold value (SW₅) (p_{amb} > SW₅) .

7. Method according to one of the preceding claims, **characterized in that** the method is executed only if the internal combustion engine has been operated at the reference operating point (B_{ref}) for a minimum period of time (Tₘᵢₙ).

8. Method according to one of the preceding claims, **characterized in that** the method is executed in an event-controlled manner.

9. Method according to Claim 8, **characterized in that** the method is executed after a predefined operating time of the internal combustion engine has elapsed and/or at least once after every tank filling process.

10. Method according to either of Claims 8 and 9, **characterized in that** the number of times the method is executed per driving cycle is limited to a maximum value.

11. Device for controlling an internal combustion engine, **characterized in that** the device operates in accordance with one of the preceding methods.

## Revendications

1. Procédé pour commander un moteur à combustion interne, les différents actionneurs du moteur à combustion interne étant excités par un appareil de commande (100) en fonction du point de fonctionnement du moteur à combustion interne, l'appareil de commande (100) excitant les actionneurs à l'aide d'une première caractéristique (140) ou d'un premier ensemble de caractéristiques lorsque le moteur à combustion interne est entraîné à l'aide d'un carburant de base aux propriétés connues et l'appareil de commande (100) excitant les actionneurs à l'aide d'une deuxième caractéristique (150) ou d'un deuxième ensemble de caractéristiques lorsque le moteur à combustion interne est entraîné à l'aide d'un carburant alternatif, **caractérisé en ce que** la consommation de carburant du moteur à combustion interne est mémorisée par unité de temps [g/h] pour un point de fonctionnement de référence (Bref) et est mémorisée comme première valeur de référence (R₁) correspondant à une utilisation du carburant de base, que la consommation de carburant réelle (V_{tatsächlich}) du moteur à combustion interne est calculée pour le point de fonctionnement de référence (Bref), que la première valeur de référence (R₁) et la consommation de carburant réelle (V_{tatsächlich}) sont comparées et que l'on déduit de la différence (Diff = R₁ - V_{tatsächlich}) entre la première valeur de référence (R₁) et la consommation de carburant réelle (V_{tatsächlich}) la qualité du carburant, qu'un changement de carburant du carburant de base au carburant alternatif est détecté lorsque la différence (Diff = R₁ - V_{tatsächlich}) entre la première valeur de référence (R₁) et la consommation de carburant réelle (v_{tatsächlich}) est positive et supérieure à une première valeur seuil (SW₁) et que cela provoque un basculement vers la deuxième caractéristique (150) ou vers le deuxième ensemble de caractéristiques.

2. Procédé selon la revendication 1, **caractérisé en ce qu'**un changement de carburant du carburant alternatif vers le carburant de base est détecté lorsque la différence (Diff = R₁ - V_{tatsächlich}) entre la première valeur de référence (R₁) et la consommation de carburant réelle (V_{tatsächlich}) est négative et inférieure à une deuxième valeur seuil (SW₂) et que cela provoque un basculement vers la première caractéristique (140) ou le premier ensemble de caractéristiques.

3. Procédé selon la revendication 1, **caractérisé en ce que** la caractéristique actuelle ou le jeu de caractéristiques actuelles sont maintenus lorsque la différence (Diff = R₁ - V_{tatsächlich}) entre la première valeur de référence (R₁) et la consommation de carburant réelle (V_{tatsächlich}) est inférieure ou égale à la première valeur seuil (SW₁) et supérieure ou égale à la deuxième valeur seuil (SW₂).

4. Procédé selon l'une quelconque des revendications précédentes, **caractérisé en ce que** le point de fonctionnement de référence (B_{ref}) correspond à la marche à vide du moteur à combustion interne et que, simultanément, la pression (p_{Rail}) régnant dans un rail du moteur à combustion interne ou la pression d'injection (pᵢₙⱼ) correspondent à une valeur prédéfinie (p_{Rail,1}) .

5. Procédé selon l'une quelconque des revendications précédentes, **caractérisé en ce que** le point de fonctionnement de référence (B_{ref}) n'est déclenché que lorsque la température du moteur à combustion interne (T_{BKM}) se situe au-dessus d'une troisième valeur seuil (SW₃) (T_{BKM} > SW₃) et que la température du carburant (T_{fuel}) se situe au-dessus d'une quatrième valeur seuil (SW₄) (T_{fuel} > SW₄) .

6. Procédé selon l'une quelconque des revendications précédentes, **caractérisé en ce que** le point de fonctionnement de référence (Bref) n'est déclenché que lorsque la pression d'air ambiante (P_{amb}) se situe au-dessus d'une cinquième valeur seuil (SW₅) (P_{amb} > SW₅) .

7. Procédé selon l'une quelconque des revendications précédentes, **caractérisé en ce que** le procédé n'est exécuté que lorsque le moteur à combustion interne a été entraîné pendant une durée minimale (Tₘᵢₙ) au point de fonctionnement de référence (B_{ref})_{.}

8. Procédé selon l'une quelconque des revendications précédentes, **caractérisé en ce que** le procédé est réalisé de façon à être commandé en fonction des événements.

9. Procédé selon la revendication 8, **caractérisé en ce que** le procédé est exécuté après écoulement d'un temps de fonctionnement prédéfini du moteur à combustion interne et/ou au moins une fois après chaque passage à la pompe.

10. Procédé selon l'une quelconque des revendications 8 ou 9, **caractérisé en ce que** le nombre d'exécutions du procédé est limité à une valeur maximale pour chaque cycle de conduite.

11. Dispositif pour commander un moteur à combustion interne, **caractérisé en ce que** le dispositif fonctionne selon un des procédés précédents.
